# DEMANDE DE BREVET EUROPEEN

(11) **EP 4 588 339 A1**
(43) Date de publication de la demande: **23.07.2025**
(21) Numéro de dépôt: 24305120.8
(22) Date de dépôt: 19.01.2024
(51) Int. Cl.: A01G 27/00, A01G 9/02

(54) **ACCESSOIRE POUR ACCUEILLIR AU MOINS PARTIELLEMENT UNE PLANTE ET DISPOSITIF COMPORTANT UN TEL ACCESSOIRE**

(71) Demandeur: RAIZ'O, 78980 Breval (FR)
(72) Inventeur: CLERISSE, Eric, 78980 Breval (FR)
(74) Mandataire: IPAZ

(57) **Abrégé**

L'invention concerne un accessoire (2) pour accueillir au moins partiellement une plante et /ou une motte de substrat dans laquelle est éventuellement plantée au moins une graine, ledit accessoire (2) comportant un récipient (20) comprenant une paroi latérale (21, 22) délimitant un espace d'accueil de ladite plante et/ou dudit substrat, caractérisé en ce que ladite paroi latérale (21, 22) est solidaire d'une partie tubulaire creuse (24), saillante vers l'extérieur dudit récipient (20), ladite partie tubulaire creuse (24) comportant une première extrémité de tube (25) ouverte dans ledit espace d'accueil et une seconde extrémité de tube (26) distante de ladite paroi latérale (21, 22) du récipient (20) et libre, ladite partie tubulaire creuse (24) étant apte à accueillir au moins une racine de ladite plante pour la guider depuis l'espace d'accueil du récipient (20) jusqu'à ladite seconde extrémité libre (26).

## Description

### Domaine technique

L'invention concerne de manière générale l'arrosage des plantes dans les potagers et vise à optimiser les besoins en eau des plantes non tubéreuse ou pivotante.

On comprendra par « plante » toute espèce végétale présentant des racines, qu'elle soit ornementale ou comestible.

Elle concerne en particulier un dispositif permettant à une plante de s'autoalimenter en eau.

### État de la technique

Pour pousser et donner de belles fleurs, de beaux fruits ou de beaux légumes, les plantes ont besoin notamment d'être régulièrement alimentées en eau.

Il existe de nombreux systèmes d'arrosage permettant de délivrer de l'eau aux pieds des plantes et de façon régulière, pour que le sol reste humide le plus longtemps possible.

Le problème, en temps de sécheresse, est la rapidité avec laquelle l'eau délivrée dans le sol s'évapore, aidé par le vent, le soleil et la température ainsi que la filtration qui accélère ce phénomène.

Pour pallier ces inconvénients, il est usuel de bâcher les sols ou d'étaler du paillis aux pieds des plantes potagères ou d'arroser plus souvent afin de conserver la plante.

D'autres solutions ont été proposées pour permettre une alimentation en eau suffisante aux plantes, même en temps de canicule.

On connait des bulles d'irrigation, qui comportent une sphère (en verre ou en matière plastique) dans laquelle débouche un tube permettant de remplir la sphère, le tube étant planté à proximité du pied de la plante pour y délivrer l'eau contenue dans la sphère. Ce dispositif fonctionne pour les plantes en pots mais pas pour les plantes installées dans des potagers.

On connait du document FR 2 837 350 un dispositif conique et poreux qui est enfoncé dans la terre. Il est coiffé d'un accessoire permettant d'y associer une bouteille d'eau, tête à l'envers, présentant au moins une ouverture dans son fond pour autoriser la délivrance de l'eau. L'eau contenue dans la bouteille alimente le dispositif poreux qui délivre l'eau dans la terre par capillarité. L'inconvénient d'un tel dispositif est qu'il est totalement inesthétique (car les bouteilles plastiques sont visibles hors du sol). De plus, il encombre l'espace autour de la plante. Par ailleurs, en cas de canicule, les bouteilles plastiques chauffent et l'eau est altérée.

De plus, le plastique cuit, jaunit et casse avec temps.

Pour pallier les inconvénients précités, la demanderesse a inventé le dispositif décrit dans la demande FR 3 124 354, qui n'encombre pas l'espace autour de la plante, qui est facile à mettre en oeuvre et qui limite l'évaporation d'eau en cas de canicule.

Le dispositif, décrit dans ce document, comporte un récipient formé par un gobelet, présentant un fond, une paroi latérale et une ouverture sommitale, par laquelle l'eau peut être introduite pour que le gobelet forme un réservoir d'eau, ledit gobelet pouvant être enterré et étant réalisé dans un matériau étanche. Le gobelet comporte également un couvercle de fermeture qui est étanche et amovible et qui est conçu pour fermer l'ouverture sommitale du gobelet.

La paroi latérale comporte au moins une ouverture traversante et un tube apte à être inséré de façon amovible dans cette ouverture de paroi, le tube étant apte à recevoir au moins partiellement une racine de ladite au moins une plante.

Une fois les racines de la plante installées dans le tube, et le tube positionné dans l'ouverture du gobelet, il n'est plus nécessaire d'arroser de façon classique la plante : ses racines grandissent dans le tube et plongent dans le gobelet rempli d'eau. La plante se sert ainsi quand elle a besoin. Le gobelet est rempli quand cela est nécessaire, mais peu souvent, puisque l'eau contenu dans le gobelet ne s'évapore pas car le gobelet est destiné à être enterré.

Bien que présentant certains avantages par rapports aux solutions connues avant lui, un tel dispositif peut toutefois paraître compliqué à mettre en oeuvre : en effet, il est délicat de positionner une partie des racines de la plante dans le tube, puis le tube dans le gobelet : en effet, pour les professionnels en horticulture, il peut être long et parfois délicat de positionner chaque plan dans chaque dispositif.

Le dispositif conforme à l'invention vise à faciliter le positionnement des racines dans le récipient.

### Exposé de l'invention

À cet effet, l'invention concerne un accessoire pour accueillir au moins partiellement une plante et /ou une motte de substrat dans laquelle est éventuellement plantée au moins une graine, ledit accessoire comportant un récipient comprenant une paroi latérale délimitant un espace d'accueil de ladite plante et/ou dudit substrat. L'accessoire est remarquable en ce que ladite paroi latérale est solidaire d'une partie tubulaire creuse, saillante vers l'extérieur dudit récipient, la partie tubulaire comportant une première extrémité de tube ouverte dans ledit espace d'accueil et une seconde extrémité de tube distante de ladite paroi latérale de récipient et libre ; ladite partie tubulaire creuse étant apte à accueillir au moins une racine de ladite plante pour la guider depuis l'espace d'accueil du récipient jusqu'à ladite seconde extrémité libre.

Le récipient, que comporte l'accessoire, permet de disposer d'une partie qui accueille soit une partie inférieure de plante, soit une plante, soit une plante associée à sa motte de terre (ou autre substrat), soit une motte de terre (ou autre substrat) qui peut contenir une graine...Ainsi, la partie récipient de l'accessoire permet de disposer d'un élément qui accueille et maintient la plante au moins en partie, ce qui facilite son positionnement dan l'accessoire, sa manipulation. La partie récipient peut également accueillir le substrat avec une graine, de sorte que l'accessoire est prêt à l'emploi : le plan poussera dans le récipient qui pourra être utilisé, par la suite, associé à un gobelet du type de celui décrit dans l'Etat de la Technique ou du type conforme à celui que comporte le dispositif conforme à l'invention qui sera décrit par la suite.

L'accessoire conforme à l'invention peut également comporter les caractéristiques suivantes, prises séparément ou en combinaison :
- ladite partie tubulaire peut présenter un axe incliné par rapport à ladite paroi latérale. De préférence, la partie tubulaire est inclinée vers le bas, de sorte à guider les racines d'une plante accueillie dans le récipient vers le bas pour qu'elles plongent dans le fond d'un gobelet d'un dispositif conforme à l'invention, comme il sera vu par la suite. De cette façon, la plante est maintenue droite et les racines guidées vers le fond du réservoir d'eau formé par le gobelet ;
- ladite paroi latérale et ladite partie tubulaire sont réalisées en une seule pièce : cela offre une meilleure résistance à l'accessoire contre les effets dégradants du temps et des conditions climatiques ;
- ledit récipient et ladite partie tubulaire sont réalisés par deux portions d'accessoire symétriques par rapport à un plan longitudinal et mobiles autour d'un axe charnière, conformément à un mode de réalisation avantageux qui sera décrit et illustré par la suite. L'axe charnière s'étend de préférence sur la hauteur de ladite paroi latérale dans ledit plan longitudinal de symétrie, entre une position ouverte suivant laquelle les deux portions d'accessoire symétriques sont écartées l'une de l'autre et une position fermée suivant laquelle les deux portions d'accessoire symétriques forment la paroi dudit récipient et la partie tubulaire, chaque portion d'accessoire comprenant une moitié de récipient et une moitié de partie tubulaire. Ce mode de réalisation permet d'ouvrir en deux l'accessoire, d'y insérer une plante avec une partie de racine dans une moitié de récipient ainsi qu'au moins une autre partie de racine dans une moitié de partie tubulaire, et de refermer l'accessoire aisément, sans blesser la plante ;
- l'accessoire est avantageusement réalisé en matière plastique (éventuellement recyclée et recyclable) et l'axe charnière est formé par une réduction de matière : il est ainsi étanche, à la fois résistant, déformable, réutilisable et peu coûteux ;
- ladite paroi latérale de récipient est au moins partiellement ajourée, notamment pour permettre aux racines de s'accrocher à la paroi latérale du récipient et de croitre dans le récipient..

Selon un autre aspect de l'invention, il est proposé un dispositif pour alimenter en eau une plante, notamment potagère, ledit dispositif comportant un accessoire tel que défini ci-dessus ainsi qu'un gobelet présentant un fond de gobelet, une paroi latérale de gobelet et une ouverture sommitale de gobelet, par laquelle l'eau peut être introduite pour que le gobelet forme un réservoir d'eau, ledit gobelet pouvant être enterré, étant réalisé dans un matériau étanche et étant équipé d'un couvercle de fermeture de ladite ouverture sommitale de gobelet, le couvercle étant étanche et amovible, et la paroi latérale de gobelet comportant au moins une ouverture de paroi qui est traversante et par laquelle ladite partie tubulaire dudit accessoire peut être inséré de façon amovible.

Le dispositif conforme à l'invention comprend ainsi une ouverture de paroi du gobelet. L'ouverture est réalisée de préférence solidaire d'un conduit saillant de ladite paroi latérale, présentant un axe de conduit qui est incliné par rapport à ladite paroi latérale, ledit conduit étant apte à accueillir au moins partiellement ladite partie tubulaire dudit accessoire. Suivant ce mode de réalisation, le conduit sert à la fois de guide et de maintien en position de la partie tubulaire de l'accessoire, ce qui facilite le positionnement de l'accessoire et assure son immobilité par rapport au gobelet une fois l'accessoire positionné ;

De préférence, ledit gobelet et/ ou ledit couvercle sont réalisés en matière plastique (et éventuellement recyclable ou recyclé).

De préférence encore, ledit couvercle de fermeture amovible comporte un trou traversant, apte à recevoir un tuyau : cela permet de remplir les gobelets avec un réseau de tubes souples d'alimentation et de vérifier visuellement que le gobelet est plein.

En outre, ladite paroi latérale de gobelet peut présenter un décrochement au moins partiellement sur sa périphérie, de sorte que le gobelet présente un premier espace interne plus large qu'un second espace interne.

Le décrochement peut être formé par une portion de paroi latérale de gobelet qui s'étend suivant un pan incliné vers le fond dudit gobelet.

Avantageusement, ledit accessoire peut présenter un encombrement tel qu'il s'inscrit dans ledit premier espace interne dudit gobelet, de manière que ledit accessoire peut être accueilli dans ledit premier espace interne dudit gobelet quand ledit dispositif n'est pas utilisé. Ce mode de réalisation permet au gobelet d'accueillir l'accessoire lorsque le dispositif n'est pas utilisé. De plus, lorsque le gobelet accueille l'accessoire non utilisé, il occupe un espace moindre ce qui permet de réaliser des conditionnements compacts et de réduire les frais de transports ou de stockage.

### Brève description des figures

L'invention sera mieux comprise à la lecture de la description qui va suivre, donnée uniquement à titre d'exemple non limitatif et faite en se référant aux dessins annexés sur lesquels :
[Fig. 1] : la figure 1 est une vue en perspective d'un dispositif conforme à l'invention, comportant un gobelet assemblé avec un accessoire conforme à l'invention,
[Fig. 2] : la figure 2 est une vue de côté de l'accessoire montré en figure 1, seul, et en position fermée,
[Fig. 3] : la figure 3 est une vue de face de l'accessoire montré en figure 1 et 2 et en position ouverte,
[Fig. 4] : La figure 4 est une vue de côté d'un gobelet du dispositif conforme à l'invention,
[Fig. 5] : La figure 5 illustre, en vue de côté et en transparence, le gobelet de la figure 4 dans lequel est placé l'accessoire en position fermée, montré en figure 2, et
[Fig. 6] : la figure 6 montre un dispositif conforme à l'invention avec un accessoire présentant une différence avec l'accessoire montré en figures 2, 3 et 5, le dispositif étant montré en vue de côté.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

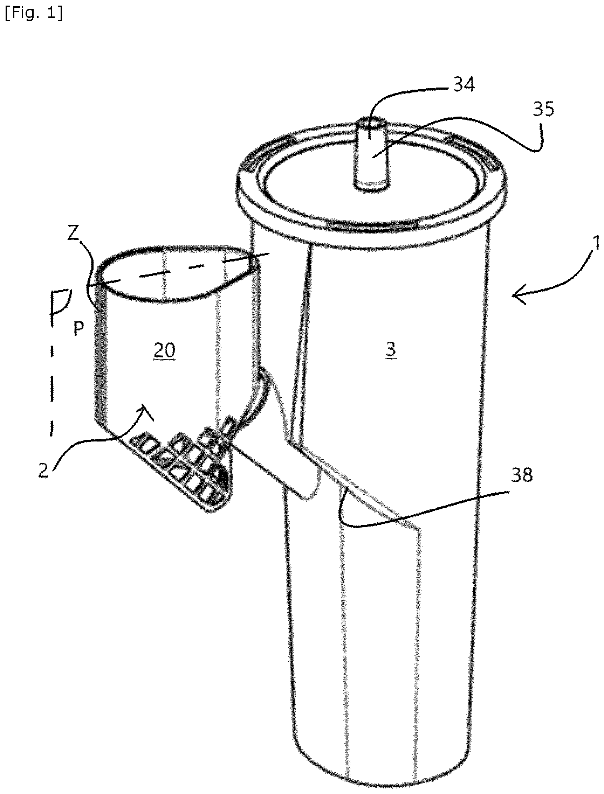

La figure 1 illustre un dispositif 1 conforme à l'invention, avec un accessoire 2 conforme à l'invention assemblé à un gobelet 3.

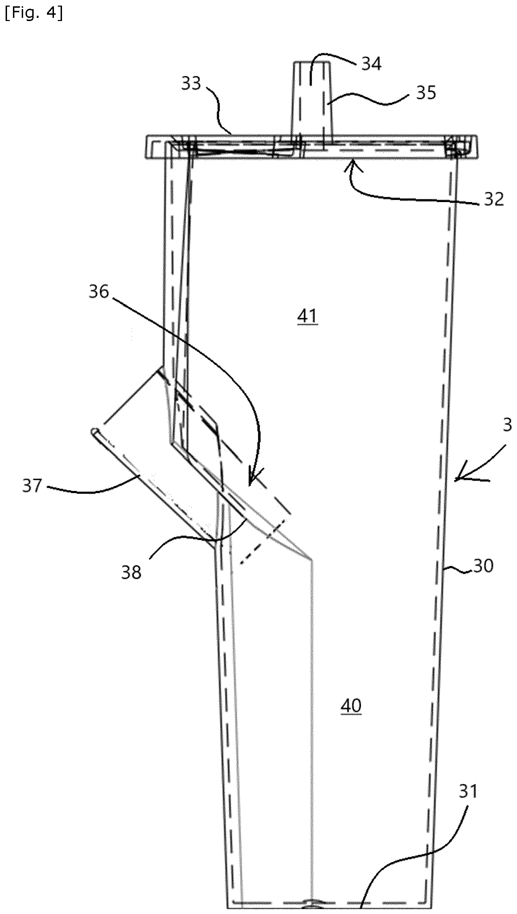

A titre de comparaison, la figure 4 illustre le même dispositif, avec l'accessoire 2 désassemblé du gobelet 3, l'accessoire 2 étant rangé dans le gobelet 3.

La figure 1 illustre le dispositif en position d'utilisation tandis que la figure 4 illustre le dispositif non utilisé.

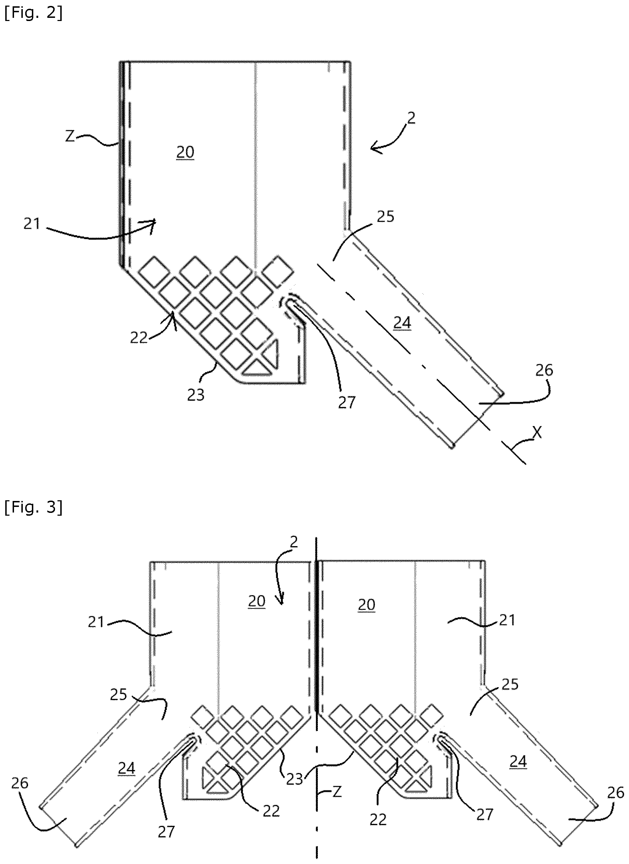

Les figures 2 et 3 illustrent l'accessoire seul.

Le figure 2 montre que l'accessoire comprend un récipient 20 sans fond, dont la fonction est principalement d'accueillir et de maintenir en position une plante, ou au moins une partie d'une plante, plus particulièrement le pied de la plante, entourée ou non de substrat (par exemple de la terre) ou bien encore une motte de substrat pouvant comprendre au moins une graine.

Ainsi mis en oeuvre, la terre (ou le substrat) maintient la plante en position dans le récipient de l'accessoire.

Le récipient 20 est de section ovoïde et présente un plan de symétrie P, comme on peut l'observer en figure 1.

Le récipient 20 comporte une paroi latérale 21 pleine, formant un manchon qui délimite un espace intérieur du récipient 20 permettant d'accueillir le pied de plante avec ou sans substrat.

La paroi pleine 21 se prolonge vers le bas par une paroi ajourée 22 qui présente des ouvertures traversantes constituant un treillis sur lequel les racines de la plante peuvent s'accrocher (et se développer), ce qui permet à la plante de se maintenir en position dans le récipient lorsque son réseau de racines s'y développe.

La paroi inférieure ajourée 22 présente une découpe 23 qui permet de faciliter l'insertion de l'accessoire 2 dans le gobelet 3 lorsque le dispositif 1 n'est pas utilisé.

La partie inférieure de la paroi pleine 21 est également solidaire d'une partie tubulaire 24 creuse, qui présente une première ouverture (à une première extrémité 25 de la partie tubulaire) qui débouche dans l'espace interne d'accueil du récipient 1, et une seconde ouverture (à une seconde extrémité 26 de la partie tubulaire), distante du récipient 20, qui est libre.

On remarque sur la figure 2 que l'axe X de la partie tubulaire creuse 24 est incliné vers le bas, par rapport à la paroi 21 du récipient 20 (ou par rapport à la charnière Z).

La partie tubulaire 24 et le récipient 20 sont réalisés en une seule pièce, de préférence par moulage de matière plastique.

Comme on peut l'observer en figure 3, l'accessoire 2 comprend deux portions d'accessoire qui sont symétriques par rapport au plan de symétrie P, et qui sont articulées l'une par rapport à l'autre autour d'un axe charnière Z.

L'axe charnière Z est réalisé par une moindre épaisseur de matière le long d'une droite qui court le long de la partie pleine 21 du récipient 20 de l'accessoire 2, sur toute sa hauteur.

L'accessoire 2 comprend ainsi deux portions d'accessoire, chacune comprenant une moitié de récipient 20 et une moitié de partie tubulaire 24, et qui sont mobiles en rotation autour de l'axe Z entre une position fermée d'accessoire (figures 1 et 2) et une position ouverte d'accessoire (figure 3).

La position ouverte d'accessoire (figure 3) permet de disposer manuellement et confortablement la plante et/ou la motte de substrat (avec plante ou avec graine) dans une première moitié de récipient 20 et, une fois la plante positionnée, il est aisé de refermer l'accessoire en rabattant l'autre moitié de récipient sur la première moitié.

Avant de faire ceci, il convient de dégager au moins une racine de la plante et de la positionner dans le demi tube 24.

Les deux portions d'accessoire 2 sont maintenues en position fermée grâce, par exemple, à un système de clipsage : de cette façon, aucun outil n'est nécessaire pour utiliser le dispositif 1 ou l'accessoire 2 conformes à l'invention.

La partie tubulaire creuse 24 de l'accessoire est conçue pour être positionnée dans le gobelet 3 qui est destiné à être rempli d'eau et enterré. De cette façon, la ou les racines de la plante qui sont positionnées dans la partie tubulaire creuse 24 sont introduites dans le gobelet 3 et sont plongées dans l'eau contenue dans le gobelet.

Il devra être compris que l'accessoire conforme à l'invention n'est pas spécifiquement limité au mode de réalisation qui vient d'être décrit : en effet, l'accessoire 2 pourrait présenter des détails de conception différents, sans sortir toutefois du cadre de l'invention.

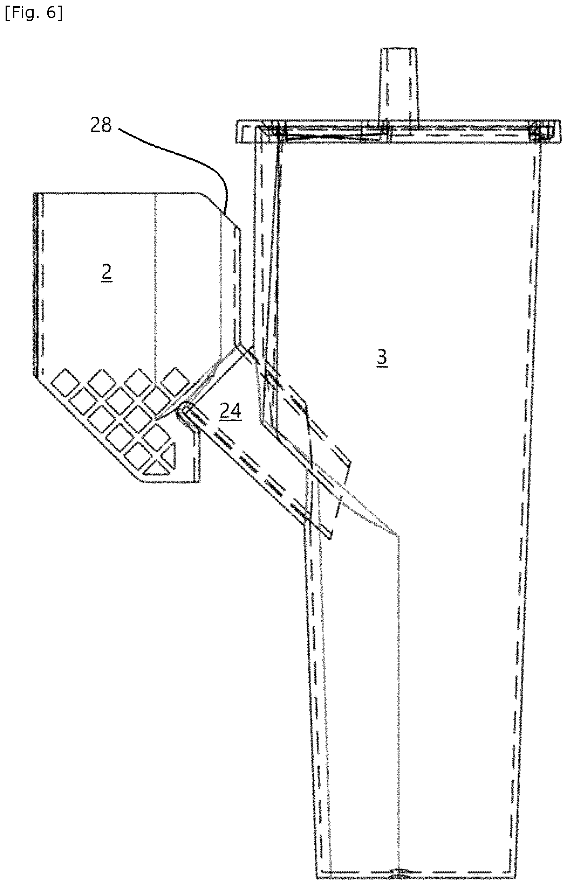

La figure 6, par exemple, illustre une variante de réalisation de l'accessoire 2 : le récipient de l'accessoire 2 présente, en effet, une partie biseautée 28 réalisée, en partie supérieure de la partie tubulaire de la paroi pleine de forme ovoïde.

La partie biseauté 28 permet à l'accessoire de ne présenter aucune partie saillante de l'ouverture du gobelet 3 quand le gobelet accueil l'accessoire 2, comme il sera vu par la suite : cela êrmet de fermer aisément le gobelet qui peut alors être contenu dans un conditionnement adapté uniquement à la forme et à la taille du gobelet.

Le gobelet 3 est illustré seul en figure 4 : il comporte une paroi latérale 30 de gobelet et un fond de gobelet 31 qui forment ensemble un récipient pouvant contenir de l'eau ou tout autre liquide.

Le gobelet 3 comprend une ouverture sommitale 32, par laquelle l'eau peut être introduite.

Comme le gobelet 3 est conçu pour être enterré, il est équipé d'un couvercle amovible 33 empêchant l'introduction de corps étrangers dans le gobelet.

Le couvercle amovible 33 comprend un trou traversant 34, à l'intérieur d'une cheminée saillante 35, qui permet de recevoir un tuyau d'alimentation d'eau, pour permettre le remplissage du gobelet une fois enterré.

Il est préférable de ne laisser apparent que la cheminée 35 du couvercle 33, quand le gobelet est enterré, pour éviter que les rayons du soleil ne viennent taper sur le couvercle et chauffer le gobelet.

Le couvercle 33 et le gobelet 3 sont réalisés de préférence en matière plastique (éventuellement recyclée ou recyclable) : l'ensemble est ainsi étanche, résistant et réalisable à moindre coût.

La paroi latérale 30 du gobelet présente une ouverture traversante 36 qui permet d'insérer la partie tubulaire 24 de l'accessoire 2.

Plus particulièrement, la paroi latérale 30 présente une cheminée saillante 37 dont le conduit délimite l'ouverture traversante 36 : l'axe de la cheminée 37 est incliné vers le bas et le diamètre interne de la cheminée 37 est sensiblement supérieur au diamètre extérieur de la partie tubulaire 24 de l'accessoire 2 pour l'accueillir.

La cheminée a pour fonction de maintenir en position la partie tubulaire 24 de l'accessoire 2, pour guider l'extrémité libre 26 de la partie tubulaire vers le fond du gobelet et la maintenir en place.

Il est à noter que la partie tubulaire 24 de l'accessoire 2 est amovible du conduit de la cheminée 37.

On remarque en figures 2, 3 et 5 que l'accessoire 2 présente une encoche 27 à l'extrémité de la partie tubulaire 24 qui rejoint la paroi latérale 21 du récipient 20.

L'encoche 27 a pour fonction d'accueillir l'extrémité du conduit de la cheminée 37, saillante de la paroi latérale du gobelet 3 : le maintien en position de l'accessoire 2 sur le gobelet 3 est ainsi facilité.

On remarque sur les figures 1, 4 et 5 que la paroi latérale 30 du gobelet 3 présente un décrochement 38, qui s'étend partiellement sur la périphérie de la paroi 30, sensiblement au même niveau que celui où se trouve le conduit de cheminée 37 : le décochement 38 permet de réduire la taille du gobelet 3 dans sa partie inférieure, en créant un espace interne inférieur 40 de gobelet qui est plus petit qu'un espace interne supérieur 40 de gobelet, qui est plus large.

Le décrochement 38 est formé par une portion de paroi latérale 30 qui s'étend suivant un pan incliné vers le fond du gobelet.

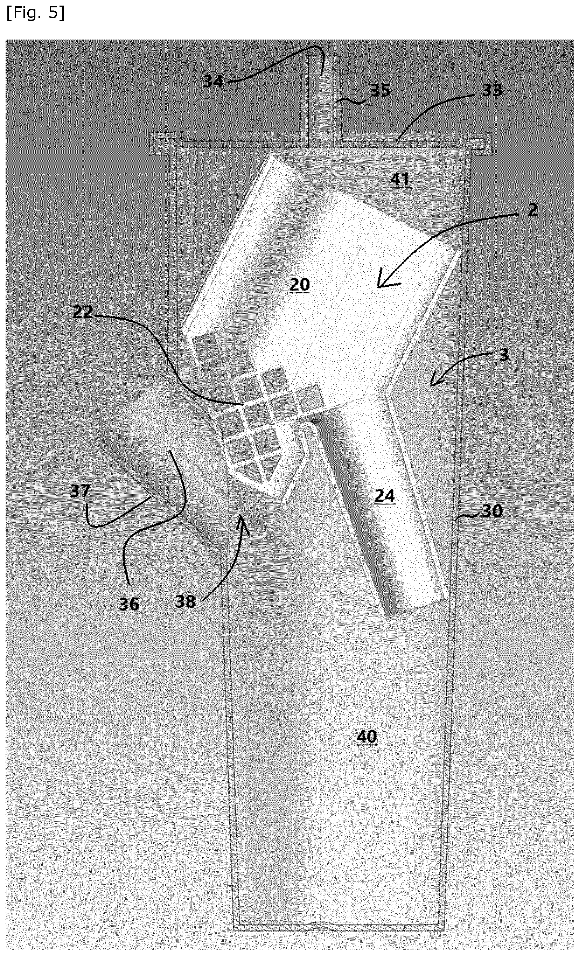

L'espace interne supérieur 40 plus large est suffisant pour accueillir l'accessoire 2 quand il n'est pas utilisé, comme le montre la figure 5.

Cela permet un gain de place pour le conditionnement du dispositif.

La partie inférieure du gobelet 3, également sensiblement en forme de tronc de cône, facilite également l'enfoncement du gobelet dans la terre.

On comprend de la description qui précède comment l'invention permet de positionner facilement une plante et son substrat, ou une plante seule, dans l'accessoire et comment assembler de façon aisée l'ensemble.

Bien entendu l'invention n'est pas limitée aux exemples qui viennent d'être décrits et s'étend à la mise en oeuvre de moyens équivalents.

## Revendications

1. Accessoire (2) pour accueillir au moins partiellement une plante et /ou une motte de substrat dans laquelle est éventuellement plantée au moins une graine, ledit accessoire (2) comportant un récipient (20) comprenant une paroi latérale (21, 22) délimitant un espace d'accueil de ladite plante et/ou dudit substrat, **caractérisé en ce que** ladite paroi latérale (21, 22) est solidaire d'une partie tubulaire creuse (24), saillante vers l'extérieur dudit récipient (20), ladite partie tubulaire creuse (24) comportant une première extrémité de tube (25) ouverte dans ledit espace d'accueil et une seconde extrémité de tube (26) distante de ladite paroi latérale (21, 22) du récipient (20) et libre, ladite partie tubulaire creuse (24) étant apte à accueillir au moins une racine de ladite plante pour la guider depuis l'espace d'accueil du récipient (20) jusqu'à ladite seconde extrémité libre (26).

2. Accessoire selon la revendication 1, **caractérisé en ce que** ladite partie tubulaire creuse (24) présente un axe (X) incliné par rapport à ladite paroi latérale (21) dudit récipient (20) de laquelle elle fait saillie.

3. Accessoire selon la revendication 1 ou 2, **caractérisé en ce que** ledit récipient (20) et ladite partie tubulaire (24) sont réalisés en une seule pièce.

4. Accessoire selon l'une quelconque des revendications précédentes, **caractérisé en ce que** ledit récipient (20) et ladite partie tubulaire (24) sont réalisés par deux portions d'accessoire symétriques par rapport à un plan de symétrie (P) longitudinal et mobiles autour d'un axe charnière (Z), qui s'étend sur la hauteur de ladite paroi latérale (21) dans ledit plan longitudinal (P) de symétrie, entre une position ouverte suivant laquelle les deux portions d'accessoire symétriques sont écartées l'une de l'autre et une position fermée ou les deux portions d'accessoire symétriques forment la paroi (21, 22) dudit récipient (20) et la partie tubulaire creuse (24), chaque portion d'accessoire comprenant une moitié de récipient (20) et une moitié de partie tubulaire creuse (24).

5. Accessoire selon les revendications 3 et 4, **caractérisé en ce qu'**il est réalisé en matière plastique et **en ce que** l'axe charnière (Z) est formé par une réduction de matière.

6. Accessoire selon l'une quelconque des revendications précédentes, **caractérisé en ce que** ladite paroi latérale (22) de récipient est au moins partiellement ajourée.

7. Dispositif pour alimenter en eau une plante, notamment potagère, ledit dispositif comportant un accessoire (2) selon l'une quelconque des revendications précédentes ainsi qu'un gobelet (3) présentant un fond (31) de gobelet, une paroi latérale (30) de gobelet et une ouverture sommitale (32) de gobelet, par laquelle l'eau peut être introduite pour que le gobelet forme un réservoir d'eau, ledit gobelet (3) pouvant être enterré, étant réalisé dans un matériau étanche et étant équipé d'un couvercle (33) de fermeture de ladite ouverture sommitale (32) de gobelet, le couvercle (33) étant étanche et amovible,
et la paroi latérale (30) de gobelet comportant au moins une ouverture (36) de paroi qui est traversante et par laquelle ladite partie tubulaire (24) dudit accessoire (2) peut être insérée de façon amovible.

8. Dispositif selon la revendication 7, **caractérisé en ce que** ladite au moins une ouverture (36) de paroi du gobelet (3) est solidaire d'un conduit (37) saillant de ladite paroi latérale (30), présentant un axe de conduit qui est incliné par rapport à ladite paroi latérale (30), ledit conduit (37) étant apte à accueillir au moins partiellement ladite partie tubulaire (24) dudit accessoire (2).

9. Dispositif selon la revendication 7 ou 8, **caractérisé en ce que** ledit gobelet (3) et/ ou ledit couvercle (33) de fermeture amovible sont réalisés en matière plastique.

10. Dispositif selon l'une quelconque des revendications 7 à 9, **caractérisé en ce que** ledit couvercle (33) de fermeture amovible comporte un trou traversant (34), apte à être raccordé à un tuyau.

11. Dispositif selon l'une quelconque des revendications 7 à 10, **caractérisé en ce que** ladite paroi latérale (30) de gobelet (3) présente un décrochement (38) au moins partiellement sur sa périphérie, de sorte que le gobelet (3) présente un premier espace interne (41) plus large qu'un second espace interne (42).

12. Dispositif selon la revendication 11, **caractérisé en ce que** ledit décrochement est formé par une portion de paroi latérale de gobelet qui s'étend suivant un pan incliné vers le fond dudit gobelet.

13. Dispositif selon l'une quelconque des revendications 11 ou 12, **caractérisé en ce que** ledit accessoire (2) présente un encombrement tel qu'il s'inscrit dans ledit premier espace interne (41) dudit gobelet (3), de manière que ledit accessoire (2) peut être accueilli dans ledit premier espace interne (41) dudit gobelet (3) quand ledit dispositif n'est pas utilisé.
